# EUROPEAN PATENT APPLICATION

(11) **EP 4 694 470 A1**
(43) Date of publication of application: **11.02.2026**
(21) Application number: 25191494.1
(22) Date of filing: 24.07.2025
(51) Int. Cl.: H04W 72/12, H04W 28/04

(54) **DATA-CONTROL FRAME SPACING IN A WIRELESS COMMUNICATION SYSTEM**

(30) Priority: 09.08.2024 GB 202411749
(71) Applicant: Nokia Technologies Oy, 02610 Espoo (FI)
(72) Inventor: WILHELMI, Francisco, Gerlingen (DE); GALATI GIORDANO, Lorenzo, Stuttgart (DE)
(74) Representative: Nokia EPO representatives

(57) **Abstract**

The present subject matter relates to a method comprising: determining a set of interfering apparatuses that are configured for accessing a communication channel of a wireless communication system using communication links between the apparatuses, the set of apparatuses comprising the apparatus; determining a transmission schedule that indicates, for each communication link, a data-control frame spacing between a data frame and corresponding control frame, the data-control frame spacing enabling a reduction of a delay in transmission of data frames by the set of apparatuses; controlling the set of apparatuses to transmit data frames and control frames in the communication channel in accordance with the transmission schedule.

## Description

### Technical Field

Various example embodiments relate to telecommunication systems, and more particularly to an apparatus for transmission of data in a communication channel using data-control frame spacings.

### Background

Multi-Access Point Coordination (MAPC) is anticipated to play a crucial role in enhancing reliability and reducing latency in the upcoming IEEE 802.11bn standard (Wi-Fi 8). This will allow Access Points (APs) from different networks to more effectively utilize spectrum resources within Overlapping Basic Service Sets (OBSSs). New mechanisms are being developed to implement MAPC, including multi-AP transmission opportunity (TXOP) sharing, coordinated spatial reuse, coordinated time division multiple access (TDMA), and coordinated beamforming. However, further improvement is still needed.

### Summary

Example embodiments provide an apparatus (referred to as first apparatus) comprising at least one processor; and at least one memory storing instructions that, when executed by the at least one processor, cause the apparatus at least to perform: determining a set of interfering apparatuses that are configured for accessing a communication channel of a wireless communication system using communication links between the set of interfering apparatuses, the set of interfering apparatuses comprising the first apparatus; determining a transmission schedule that indicates, for each communication link, a data-control frame spacing between a data frame and corresponding control frame, the data-control frame spacing enabling a reduction of a delay in transmission of data frames by the set of apparatuses; controlling the set of interfering apparatuses to transmit data frames and control frames in the communication channel in accordance with the transmission schedule.

Example embodiments provide a method comprising: determining a set of interfering apparatuses that are configured for accessing a communication channel of a wireless communication system using communication links between the set of interfering apparatuses; determining a transmission schedule that indicates, for each communication link, a data-control frame spacing between a data frame and corresponding control frame, the data-control frame spacing enabling a reduction of a delay in transmission of data frames by the set of interfering apparatuses; controlling set of interfering apparatuses to transmit data frames and control frames in the communication channel in accordance with the transmission schedule.

Example embodiments provide a computer program comprising instructions for causing an apparatus for performing at least the following: determining a set of interfering apparatuses that are configured for accessing a communication channel of a wireless communication system using communication links between the set of interfering apparatuses, the set of interfering apparatuses comprising the apparatus; determining a transmission schedule that indicates, for each communication link, a data-control frame spacing between a data frame and corresponding control frame, the data-control frame spacing enabling a reduction of a delay in transmission of data frames by the set of apparatuses; controlling the set of apparatuses to transmit data frames and control frames in the communication channel in accordance with the transmission schedule.

Example embodiments provide a non-transitory computer readable medium comprising program instructions that, when executed by an apparatus, cause the apparatus to perform at least the method.

"First," "Second," etc. as used herein, these terms are used as labels for nouns that they precede, and do not necessarily imply any type of ordering (e.g., spatial, temporal, logical) unless explicitly defined as such.

### Brief Description of the Drawings

The accompanying figures are included to provide a further understanding of examples, and are incorporated in and constitute part of this specification. In the figures:
FIG.1 is a flowchart of a method for transmission of data in a communication channel using data-control frame spacings in accordance with an example of the present subject matter;
FIG. 2 is a flowchart of a method for determining a set of interfering apparatuses in accordance with an example of the present subject matter;
FIG. 3 illustrates an example wireless communication system in which the present subject matter may be implemented in accordance with an example;
FIG. 4 depicts a signaling diagram illustrating a method for data transmission by a set of apparatuses using a same communication channel of a wireless communication system in accordance with an example of the present subject matter;
FIG. 5A depicts a signaling diagram showing an example of control or management frame transmission coordination for the operation phase of a Coordinated ACK (C-ACK) transmission method utilizing the MAPC protocol as the coordination framework according to an example of the present subject matter;
FIG. 5B illustrates the status of the access to the communication channel by the set of apparatuses in accordance with the C-ACK transmission method;
FIG. 6A depicts a signaling diagram showing the operation phase of the C-ACK transmission method utilizing the multi-AP TXOP sharing protocol as the coordination framework according to an example of the present subject matter;
FIG. 6B illustrates the status of the access to the communication channel by the set of apparatuses in accordance with the C-ACK transmission method involving one TXOP;
FIG. 6C illustrates the status of the access to the communication channel by the set of apparatuses in accordance with the C-ACK transmission method involving multiple TXOPs;
FIG. 7A depicts a signaling diagram showing the operation phase of the C-ACK transmission method utilizing the block acknowledgement (BACK) protocol as the coordination framework according to an example of the present subject matter;
FIG. 7B illustrates the status of the access to the communication channel by the set of apparatuses in accordance with the C-ACK transmission method and the BACK protocol;
FIG. 8 is a block diagram showing an example of an apparatus according to an example of the present subject matter.

### Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

For transmissions on the same communication channel, enabling concurrent access may be necessary. However, coordinating this access can introduce delays due to the need to manage and synchronize multiple transmissions. These delays can arise from the overhead of coordination, the time required to resolve conflicts between links, or ensuring that all devices adhere to prioritization rules. For instance, in a wireless communication system, associating data frames with control frames can lead to higher latency, as waiting for control frames like acknowledgment (ACK) frames before sending the next data frame can cause delays. While these delays may be used for maintaining orderly and efficient communication, they can negatively impact time-sensitive data transmissions, potentially affecting overall network performance and user experience. The present subject matter may address this issue by enabling a coordination mechanism that balances the need for efficient concurrent access with the minimization of transmission delays, ensuring both high performance and timely data delivery. Specifically, the present subject matter may aim to utilize the advantages of associating data frames with control frames while minimizing its drawbacks by enabling efficient transmission in concurrent environments, thereby reducing delays in data transmission. Additionally, it may enable the prioritization of low-latency data, allowing for quicker transmission compared to existing data transmission protocols.

The data frame may be a data packet structure that includes a data payload along with additional information. The additional information may, for example, include headers and trailers necessary for transmission. The data frame may serve as a fundamental unit of communication in the wireless communication system, defining how data is formatted and transmitted over a network of the wireless communication system. For example, the data frame may comprise a header, which contains metadata about the frame like source and destination addresses, error-checking information, and control information; a payload, which is the actual data being transmitted, such as a segment of a file or a video stream, and a trailer, which includes error detection and correction information to ensure data integrity. The structure and content of data frames may vary depending on the specific networking protocol used by the wireless communication system.

The control frame may not carry a data payload in the sense of user data but may include information necessary for managing or controlling communication within the network. Thus, the control frame as used herein may also refer to a management frame. For example, the structure of the control frame may comprise a header, which contains control information such as source and destination addresses and other metadata relevant to the specific control function, and control information that replaces the data payload. This control information may include instructions or signals that help manage network operations, like access control, error checking, and synchronization. The control frame may be, for example, an acknowledgment (ACK) frame, a block acknowledgment (BACK) frame, a request to send (RTS) frame, a clear to send (CTS) frame, or any other control frame associated with a data frame, facilitating the transmission of the data frame based on the control information contained within the control frame.

A first apparatus may be configured to access a communication channel of the wireless communication system. This access may involve transmitting data using the communication channel. The wireless communication system may comprise wireless networks. The communication channel may be of a first wireless network of the wireless communication system. The first apparatus may, for example, be connected to the first wireless network. A wireless network of the wireless communication system may refer to a network comprising one or more network nodes such as access points or the like which are capable of wireless radio communication with apparatuses connected to the wireless network. However, the communication channel may not be exclusively accessible by the first apparatus, as other apparatuses may compete with it to use the same communication channel. Consequently, these apparatuses, including the first apparatus, may form a set of interfering apparatuses. The first apparatus may have the priority to first access to the communication channel.

The set of interfering apparatuses may comprise pairs of apparatuses, with each pair defining a communication link for exchanging data, including both data and control frames, over the same communication channel. As a result, these communication links are defined between the set of interfering apparatuses. The set of interfering apparatuses may thus be described as being configured to access the communication channel of the wireless communication system using communication links between the set of interfering apparatuses. The communication link represents a logical connection between a pair of apparatuses within the wireless communication system. In other words, the communication link is defined by the specific pair of apparatuses involved. The communication channel refers to a specific frequency range, and transmitting data through this communication channel involves encoding the data into signals that correspond to the frequency within that range.

The set of interfering apparatuses may be determined by the first apparatus. The set of interfering apparatuses may interfere because all its members may contend for the same communication channel, potentially causing collisions and signal interference. Such competition can lead to delays, reduced data throughput, and decreased overall network efficiency. The present subject matter may address and resolve this issue.

For simplification of the description, the set of interfering apparatuses may be referred to as the set of apparatuses. Each apparatus of the set of apparatuses may be, for example, an access point of a wireless network or a wireless device configured to be connected to that wireless network. This wireless device may include a mobile station, subscriber station, remote terminal, wireless terminal, receive point, user device, smartphone, tablet, laptop, IoT device, or any other type of equipment capable of wireless communication within the wireless network.

Communication links which are defined between the set of apparatuses may be a set of two or more communication links. The set of communication links may include at least one communication link defined by a respective pair of apparatuses, which pair including the first apparatus. The first apparatus may be configured to determine a transmission schedule for the set of apparatuses, which may reduce transmission delays of data frames by the set of apparatuses compared to an existing schedule. For each communication link of the set of communication links, the transmission schedule may define a data-control frame spacing between a data frame and corresponding control frame that are transmitted on the each communication link. This may result in a set of data-control frame spacings for the set of communication links respectively. The set of data-control frame spacings are so defined by the first apparatus to enable said reduction of the delay in transmission of data frames by the set of apparatuses.

For example, data may be transmitted over a communication link by pairing one or more data frames with a control frame, creating what is referred to as a data-control pair. Multiple data-control pairs may be transmitted on the same communication link. The number of data frames paired with a control frame in a data-control pair may depend on the communication protocol used by the wireless communication system. For example, the data-control pair may comprise one data frame and a corresponding control frame. Alternatively, the data-control pair may comprise multiple data frames and a corresponding control frame. Thus, "the transmission schedule indicates, for each communication link, the data-control frame spacing between a data frame and its corresponding control frame" may mean that the transmission schedule indicates the data-control frame spacing between each data-control pair to be transmitted on the each communication link. The transmission of a data-control pair may be referred to as a transmission instance, where a transmission cycle refers to the process in which each communication link of the set of communication links has completed one transmission instance. In one example, the transmission instance may include a step of gaining access to the communication channel for enabling the transmission of the da-control pair.

The first apparatus may be configured to control the set of apparatuses to transmit data frames and corresponding control frames in the communication channel in accordance with the transmission schedule. For example, for each communication link Lx of the set of communication links, the pair of apparatuses that define the communication link Lx may be controlled by the first apparatus to transmit data-control pairs using the communication channel and in accordance with the data-control frame spacing which is determined for the communication link Lx. This controlling may also concern the communication link(s) that involves the first apparatus.

In one example, the transmission schedule may be determined for one transmission cycle.

In another example, the transmission schedule may be determined for multiple (consecutive) transmission cycles. In this case, the transmission schedule may be structured so that it includes one individual schedule per transmission cycle. In one example, the set of data-control frame spacings governing these transmissions may be applied consistently across each of the individual schedules. Thus, in each transmission cycle the set of apparatuses may concurrently access the communication channel.

For example, for each communication link Lx of the set of communication links, the transmission of data-control pair(s) may be performed as follows. For example, one or more transmission instances may be performed on the communication link Lx. The one or more transmission instances may be performed consecutively, one transmission instance after another transmission insurance. A current transmission instance on the communication link Lx may comprise a transmission of a data frame by one of the pair of apparatuses that define the communication link Lx and a transmission of a corresponding control frame by that one apparatus or by the other apparatus of the pair of apparatuses. This transmission instance is performed so that the period between the end of the data frame's reception and the time when the control frame is transmitted is the data-control frame spacing that is associated with the communication link Lx.

To simplify, consider three wireless networks that involve three communication links L1, L2 and L3 respectively. Each communication link is defined by an access point of the wireless network and a wireless device connected to the wireless network. For example, one transmission instance may be performed on each communication link. The transmission instance on the communication link L1 may include a data frame df1 and corresponding control frame cf1. The transmission instance on the communication link L2 may include a data frame df2 and corresponding control frame cf2. The transmission instance on the communication link L3 may include a data frame df3 and corresponding control frame cf3. For example, according to a coordination framework, the communication link L1 may first have access to the communication channel followed by communication L2 and then followed by communication link L3. The transmission schedule defined for the three communication links may indicate that df1 is transmitted first, followed by df2, and then df3. And, only after the data frames are transmitted, control frames cf1, cf2 and cf3 may be transmitted, with the time interval between each data frame and corresponding control frame defined by the corresponding data-control frame spacing. This may mean that the transmission of control frames cf1 and cf2 is deferred until all data frames are transmitted. This may speed up the transmission process of data frames df2 and df3, and thus reduce the delay in transmission of data frames by the set of apparatuses between which the communication links L1, L2 and L3 are defined. Alternatively, the transmission schedule defined for the three communication links may indicate that df1 is transmitted first, followed by df2, and then df3. And, only control frame cf3 is deferred to after the data frames are transmitted, with the time interval between each data frame and corresponding control frame defined by the corresponding data-control frame spacing. This may speed up the transmission process of data frame df2, and thus reduce the delay in transmission of data frames by the set of apparatuses between which the communication links L1, L2 and L3 are defined.

The present subject matter may provide different types of associations between data and control frames. In one example, a control frame may be associated with data frame a posteriori, meaning after the data frame of a data-control pair is transmitted, a corresponding control frame of the data-control pair is sent to confirm its successful reception. This method may ensure data integrity and reliability by providing a mechanism for error detection and retransmission if needed. Conversely, a control frame of a data-control pair may be sent a priori before a corresponding data frame of the data-control pair to manage channel access and prevent collisions by ensuring the communication link is clear before transmitting data. Hence, the present subject matter may make use of the data-control frame spacing for different types of control frames. In one example, the present subject matter may advantageously use control frames as acknowledgment frames. In this approach, the control frames involved in the transmission schedule would serve as acknowledgment frames or block acknowledgment frames. That is, the control frame may be an ACK frame or BACK frame. This may particularly be beneficial because acknowledgment frames have a direct impact on the delay between transmission instances, helping to optimize timing and reduce latency.

According to one example, the duration of the transmission instance includes transmitting the data frame, transmitting the control frame, and the data-control frame spacing on the communication link. For example, the duration of the transmission instance includes transmitting data frame(s) and control frame of the data-control pair and the data-control frame spacing on the communication link. The data-control frame spacing is indicative of a point of time at which to transmit the control frame after transmitting a corresponding data frame, wherein the point of time occurs before a next transmission instance on the communication link. With this example, the transmission of the control frame may be deferred, but it may remain within a certain limit, ensuring it does not extend beyond the duration of the current transmission instance to the start of the next transmission instance.

The "duration of the transmission instance includes transmitting the data frame, transmitting the control frame, and the data-control frame spacing" may mean that the total time for the transmission instance encompasses the time taken to transmit the data frame, the time taken to transmit the control frame, as well as the data-control frame spacing between the data frame and control frame. The time taken to transmit the data frame (or control frame) may refer to the duration required for the transmission of the data frame from the source apparatus to the destination apparatus using a wireless signal. This time may include the creation of a signal for the data frame, the actual transmission of the signal and any additional time needed for processing and accessing the communication channel.

Sending the control frame before the transmission of the next transmission instance may ensure reliable communication. It may, for example, allow the sender to confirm that the previous data frame was received successfully and without errors, enabling error detection and correction if necessary. This process may help manage the flow of data, preventing the sender from overwhelming the receiver and ensuring that each data frame is processed before the next one is sent.

According to one example, the data-control frame spacing of each communication link of the set of communication links may last for at least one of the following: the duration of one or more transmission instances on respective other communication links of the set of communication links, one or more default Arbitration Inter-Frame Spaces (AIFSs), a time of transmission of a BACK request, or a time for gaining access to the communication channel.

Gaining access to the communication channel may involve determining that the communication channel is free by listening to the communication channel and waiting for an appropriate time slot, e.g., the time slot may include a duration counted by a backoff timer, for performing data transmission on the communication channel.

The one or more transmission instances on respective other communication links of the set of communication links may belong to the same transmission cycle. That is, the transmission instances used to define the data-control frame spacing for a specific transmission instance may belong to the same transmission cycle as that specific transmission instance.

To simplify the description of this example, consider the example of three wireless networks that involve three communication links L1, L2 and L3 respectively. For example, the data-control frame spacing of communication link L1 may last the duration of one transmission instance on communication link L2, the duration of one transmission instance on communication link L3 and one or more AIFSs, the data-control frame spacing of communication link L2 may last the duration of one transmission instance on communication link L3 and one or more AIFSs while the data-control frame spacing of communication link L3 may last one AIFS, since the transmission instances on L1 and L2 occurred before the one on L3.

Providing different types of timing intervals which are involved in each transmission cycle may allow the first apparatus to flexibly determine the most suitable data-control frame spacing for each communication link, ensuring that in each transmission cycle: a) each communication link is utilized for its transmission instance, and b) the delay in transmission of data frames is minimized. The timing intervals may be determined based on the specific communication protocol employed by the wireless communication system.

According to one example, the wireless communication system comprises neighbouring wireless networks comprising a group of apparatuses including the set of apparatuses. The first apparatus may be configured for determining the set of apparatuses by at least: collecting information indicating capabilities of the entire or a subgroup of the group of apparatuses of the wireless networks and using the collected information for selecting the set of interfering apparatuses. The entire group or the subgroup of apparatuses may be referred to as the initial group of apparatuses.

This example may enable a dynamic coordination to effectively manage high-density environments and overlapping networks. The decision to involve all apparatuses or just a subgroup may depend on the network's architecture and specific objectives, such as reducing interference or optimizing spectrum usage in a particular area. Collecting information from a subgroup of apparatuses may enable coordination to be focused on specific apparatuses, such as those in close proximity or with overlapping coverage areas. This targeted approach can streamline the process and reduce the coordination overhead. However, collecting information from the entire group of apparatuses can help avoid missing any relevant interfering apparatuses. The collected information of a given apparatus may include the capabilities of the given apparatus, such as supported frequency bands, channel widths, transmit power levels, antenna configurations, Quality of Service (QoS) capabilities, support for specific protocols, and processing and buffering capacity. This information may help to optimize network performance by leveraging the strengths and addressing the limitations of the queried initial group of apparatuses.

For the selection of the set of apparatuses, the initial group of apparatuses may be refined. For that, the collected information may be used to first determine a candidate set of interfering apparatuses that are configured to access the communication channel. Refining the initial group into the candidate set of interfering apparatuses may allow for more targeted and efficient coordination, focusing on apparatuses with overlapping coverage or close proximity. According to one example, the first apparatus may be configured to perform the selecting of the set of interfering apparatuses from the candidate set based on the capabilities by at least: gaining access to the communication channel and performing a selection operation. The selection operation comprises: sending a trigger message to a subset of the candidate set of apparatuses for triggering a transmission in accordance with the determined transmission schedule, in response to the sending of the trigger message, receiving a confirmation message from at least some of the apparatuses, and selecting, using the apparatuses that provided the confirmation messages, the set of interfering apparatuses based on the confirmation messages. The selection of the set of interfering apparatuses may be performed using the received confirmation messages. For example, the set of interfering apparatuses may be the apparatuses that provided the confirmation messages. In another example, in case the apparatuses that provided the confirmation messages are access points, the set of interfering apparatuses may comprise the access points and wireless devices being served by the access points.

The subset of the candidate set of apparatuses may, for example, be selected from the candidate set of apparatuses based on a selection criterion. The selection criterion may, for example, involve a random selection or a prioritized choice based on specific parameters such as performance, availability, or other predefined factors.

According to one example, the subset of apparatuses are access points. Additionally, the first apparatus may be an access point. This may be advantageous because the access points may serve as the central control points in the wireless communication system, managing overall communication, resource allocation, and interference. This centralized approach may ensure consistent and reliable management of network resources. In this example, the set of interfering apparatuses may be access points of the subset and wireless devices being served by said access points.

The coordination mechanism according to the present subject matter may, for example, use a coordination framework which is defined by a multi-AP TXOP sharing protocol, a MAPC protocol, or a BACK protocol. Multi-AP TXOP sharing (TXS) protocol may provide a coordination framework for managing channel access by allowing an apparatus exclusive use of the channel for a set time, enabling efficient data transmission. MAPC protocol may establish coordination among multiple access points to optimize spectrum usage and reduce interference. BACK protocol may provide a coordination framework for efficiently acknowledging multiple data frames in a single message, reducing overhead. Thus, the present subject matter may operate smoothly and efficiently with these protocols for managing access, coordination, and acknowledgment processes.

According to one example, the set of apparatuses are controlled to perform respective transmission instances during a shared transmission opportunity (TXOP).

For example, the first apparatus may have the priority to first access to the communication channel, wherein the TXOP may be the time interval during which the first apparatus has the priority access to the communication channel. Sharing the TXOP may allow this opportunity to be divided among the set of apparatuses, enabling them to transmit within the same TXOP. This approach can be used to improve efficiency and further reduce delay in the transmission of the data frames by the set of apparatuses. This is because the steps that each apparatus would typically need to take to establish its own TXOP can be bypassed, as they all utilize a TXOP already configured by the first apparatus. Examples of these individual steps include the time required to prepare for and access the communication channel. For example, the transmission schedule may be determined for one transmission cycle that occurs within the shared TXOP.

According to one example, the trigger message comprises one or more Multi-User Request to Send (MU-RTS) TXS control frames for scheduling the apparatuses within one or more same TXOPs and for querying information for the determination of the transmission schedule, wherein the confirmation message comprises one or more Clear to Send (CTS) frames. MU-RTS TXS and CTS frames are examples of frames being used to extend the TXOP sharing capability in order to support multi-AP TXOP sharing. The MU-RTS TXS control frame may be obtained by extension of the MU-RTS frame to offer the capability of triggering other APs from other BSSs in the upcoming shared TXOP.

According to one example, the set of apparatuses are configured to share one or more transmission opportunities to perform the transmission of data frames by the set of apparatuses, wherein the data-control frame spacing lasts within a single transmission opportunity or extends across two or more transmission opportunities.

According to one example, the wireless communication system is configured according with a MAPC protocol. The set of apparatuses are controlled to transmit the data frames and control frames in accordance with the transmission schedule during a MAPC session that is established between the set of apparatuses. For example, the sequence in which data frames and control frames are transmitted by each apparatus of the set of apparatuses may be determined according to the MAPC protocol, while the data-control frame spacing between data frames and control frames may be defined according to the transmission schedule. That is, once the set of apparatuses is identified, they may be controlled to communicate according to the MAPC protocol, with the added constraint of adhering to the specified transmission schedule. In one example, the MAPC session may include the set of apparatuses and other apparatuses of the subset of apparatuses or of the candidate set of interference apparatuses.

In addition, the first apparatus may utilize the existing signaling mechanisms defined for establishing and terminating the MAPC session to identify the set of apparatuses, determine the transmission schedule and terminate the utilization of the transmission schedule. According to one example, the wireless communication system is configured according with the MAPC protocol. The first apparatus may be configured to perform the selection operation as part of a MAPC session establishment between the set of apparatuses, wherein the trigger message comprises a MAPC coordination frame, wherein the confirmation message comprises a MAPC coordination frame.

According to one example, the MAPC coordination frame received from each apparatus comprises a delay metric. The first apparatus may be configured to use the received delay metrics to determine the transmission schedule.

With the MAPC protocol, the candidate set of interference apparatuses that is refined from the initial group may be an MAPC group. That is, the collected information may be used to determine the MAPC group using the MAPC protocol.

According to one example, the wireless communication system is configured according with a BACK protocol. The set of apparatuses are controlled to transmit the data frames and control frames in accordance with the transmission schedule during a BACK session that is established between the set of apparatuses.

According to one example, the wireless communication system is configured according with the BACK protocol. The first apparatus may be configured to perform the selection operation as part of a BACK session establishment between the set of apparatuses. The trigger message comprises an Add Block Acknowledgment (ADDBA) request, wherein the confirmation message comprises an ADDBA response. In one example, the BACK session may include the set of apparatuses and other apparatuses of the subset of apparatuses or of the candidate set of interference apparatuses.

According to one example, the data-control frame spacing includes the time at which a BACK request is performed. For example, the data-control frame spacing may be configured so that the time at which the BACK request is sent falls within the data-control frame spacing and that the control frame is to be transmitted within a BACK block associated with the BACK request. The BACK request may be sent by any apparatus of the set of apparatuses, of a given communication link, and detected by a transmitter of each communication link of the set of communication links that is different from the given communication link.

According to one example, the first apparatus may be configured to control the set of apparatuses to terminate a transmission in accordance with the transmission schedule. Once the specific need for coordination among the set of apparatuses is resolved, ending the transmission schedule usage may optimize performance and minimize unnecessary complexity, ensuring that the wireless communication system operates efficiently and flexibly.

According to one example, the first apparatus may be configured to modify the transmission schedule and control the set of apparatuses to transmit data frames and control frames in accordance with the modified transmission schedule.

Modifying the transmission schedule instead of terminating may allow to dynamically adapt to changing conditions while maintaining the benefits of coordination. The network may continue to optimize performance in response to new traffic patterns, user density, or interference levels. This flexibility may ensure that the network remains efficient and effective without the need to completely restart the coordination process, thereby reducing downtime and maintaining seamless connectivity for users.

According to one example, the set of apparatuses comprising access points and wireless devices of neighbouring wireless networks of the wireless communication system.

The present subject matter may seamlessly be integrated in existing wireless communication systems such as Wi-Fi systems. The wireless communication system according to the present subject matter may be a Wi-Fi system, but it is not limited to Wi-Fi alone. It can also be adapted for use in other wireless communication systems, such as cellular networks, and any other protocols that involve managing access to a shared communication channel.

According to one example, the wireless communication system comprising basic service sets (BSSs), wherein the set of apparatuses comprises access points and stations of interfering BSSs.

According to one example, the determining of the set of apparatuses is performed by sensing inter-BSS transmissions to identify a presence of overlapping BSSs that are used to form the set of apparatuses.

Using BSSs and control frames as acknowledgement frames (ACK) may enable a coordination mechanism for the coordination of ACK transmissions. This concept may be referred to as Coordinated ACK (C-ACK) transmission. Furthermore, the method not only covers intra-BSS transmissions, but also applies to inter-BSS ones.

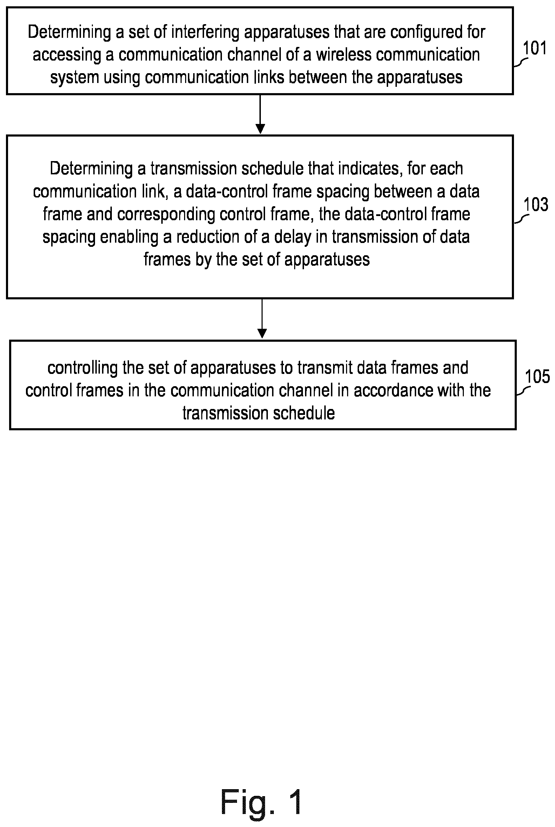

FIG. 1 is a flowchart of a method for transmission of data in a communication channel of a wireless communication system in accordance with an example of the present subject matter. The method of FIG. 1 may, for example, be performed by a first apparatus such as the apparatus of FIG. 10.

A set of interfering apparatuses (set of apparatuses) that are configured for accessing the communication channel may be determined in step 101. The set of apparatuses may be configured for accessing the communication channel using communication links between the set of apparatuses. The set of apparatuses comprises the first apparatus.

A transmission schedule may be determined in step 103. The transmission schedule indicates or specifies, for each communication link of the communication links, a data-control frame spacing between a data frame and corresponding control frame. The data-control frame spacings enable a reduction of a delay in transmission of data frames by the set of apparatuses.

The set of apparatuses may be controlled in step 105 to transmit data frames and control frames in the communication channel in accordance with the transmission schedule.

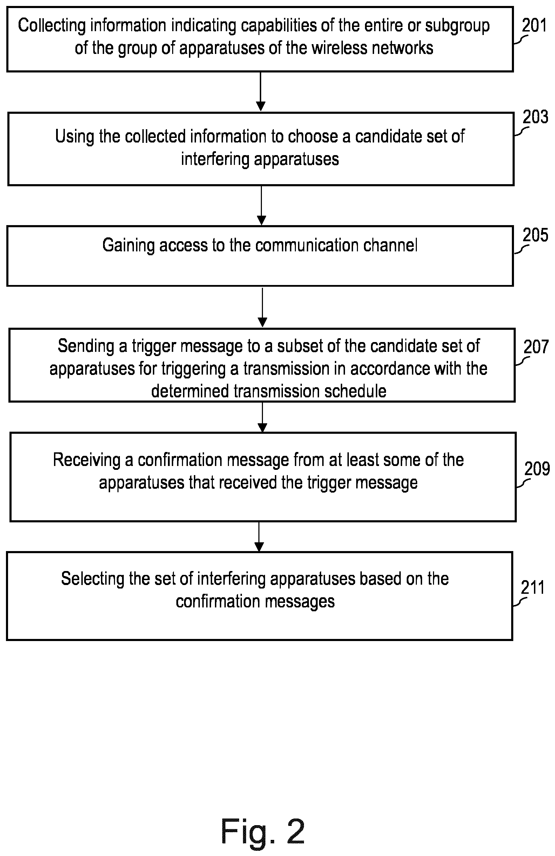

FIG. 2 is a flowchart of a method for determining a set of interfering apparatuses configured to access a communication channel of a wireless communication system in accordance with an example of the present subject matter. The wireless communication system comprises neighbouring wireless networks comprising a group of apparatuses. The method of FIG. 2 may, for example, be performed by a first apparatus such as the apparatus of FIG. 10.

Information indicating capabilities of the entire or subgroup of the group of apparatuses of the wireless networks may be collected in step 201.

The collected information may be used in step 203 to choose or select a candidate set of interfering apparatuses from the apparatuses from which the information was collected.

The first apparatus may gain access to the communication channel in step 205.

A trigger message may be sent in step 207 to a subset of the candidate set of apparatuses for triggering a transmission in accordance with the determined transmission schedule.

In response to the sending of the trigger message, a confirmation message may be received in step 209 from at least some of the apparatuses that received the trigger message.

Using the apparatuses that provided the confirmation messages, the set of interfering apparatuses may be selected in step 211 based on the confirmation messages.

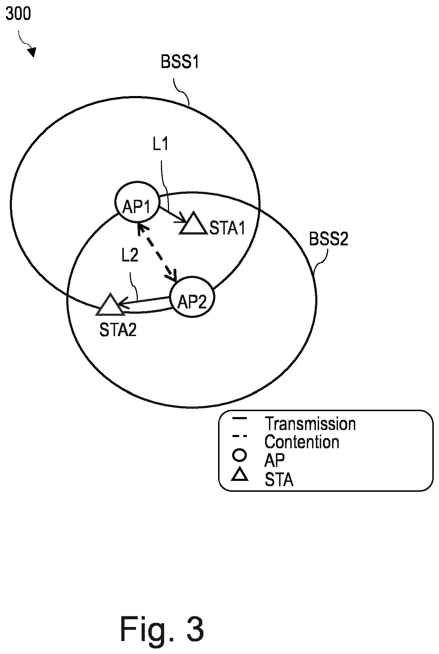

**FIG. 3** illustrates an example wireless communication system in which the present subject matter may be implemented in accordance with an example. The wireless communication system 300 is a Wi-Fi system comprising two neighboring BSSs, BSS1 and BSS2. BSS1 includes an access point AP1 and a station STA1, while BSS2 similarly comprises an access point AP2 and a station STA2.

As illustrated in FIG. 3, within BSS1, the access point AP1 and the station STA1 may be a pair of apparatuses that define a communication link L1 through a communication channel, with one apparatus functioning as the transmitter and the other apparatus as the receiver. In BSS2, the access point AP2 and the station STA2 may be a pair of apparatuses that define a communication link L2 through the communication channel, with one apparatus functioning as the transmitter and the other apparatus as the receiver.

To perform transmissions on the two communication links, L1 and L2, using the same communication channel, a prioritization mechanism like the MAPC protocol, which allows for concurrent access to the communication channel, may be used. However, this coordinated concurrent access may result in delays due to the need to manage and synchronize multiple transmissions effectively. To address this issue, a transmission schedule may be determined for the access points AP1 and AP2 and the stations STA1 and STA2 in accordance with the present subject matter. For that, the method of FIG. 1 may, for example, be used, where the first apparatus may be the access point AP1, and the set of apparatuses are the access points AP1 and AP2 and the stations STA1 and STA2. In the following figure descriptions, APx may be referred to as access point APx or apparatus APs. Similarly, STAx may be referred to as station STAx or apparatus STAx.

For simplicity, only two wireless networks are illustrated, with each network consisting of one access point and one station. However, it is not limited to as this configuration can be expanded to include multiple networks and multiple access points and stations within each network, depending on the specific requirements or use case.

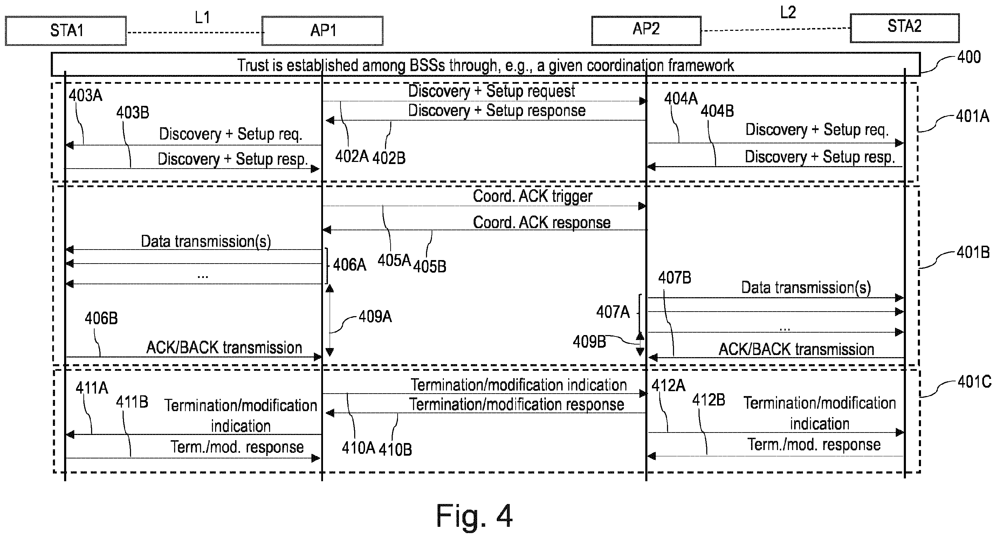

**FIG. 4** depicts a signaling diagram illustrating a method for data transmission by a set of apparatuses using a same communication channel of a wireless communication system in accordance with an example of the present subject matter. The wireless communication system may, for example, be the wireless communication system 300 of FIG. 3. The method of FIG. 4 may be referred to as coordinated ACK (C-ACK) transmission method. The C-ACK transmission method may, for example, be an example implementation of the method of FIG. 1.

As indicated (400) in FIG. 4, the set of apparatuses AP1, AP2, STA1 and STA2 may be obtained or selected in accordance with a coordination framework. The involved APs may, for example, be assumed to be in a coordination agreement that allows them exchanging signaling messages for the sake of coordinating the transmission of ACKs and BACKs. This may enable to establish some trust among the BSSs, BSS1 and BSS2. The method may comprise three phases, a setup phase 401A, an operation phase 401B and a termination or modification phase 401C. In this example, the access point AP1 may initially gain access to the communication channel, potentially due to an assigned priority.

In the setup phase 401A, access point AP1 may initiate the process by sending (402A) a discovery and setup request to access point AP2. In response, access point AP2 may reply (402B) with a discovery and setup response. This may trigger access point AP2 to send (404A) a discovery and setup request to station STA2. In response, station STA2 may reply (404B) with a discovery and setup response. The access point AP1 may send (403A) a discovery and setup request to station STA1. In response, access point AP2 may reply (403B) with a discovery and setup response.

Hence, the setup phase 401A may, for example, enable the APs and their associated STAs discover each other's capabilities and agree on the conditions for the coordinated ACK transmission method. The coordinated ACK transmission method may be implemented on apparatuses that have been configured with coordinated ACK transmission functionality. For the discovery of the coordinated ACK functionality, the coordinated access points AP1 and AP2 exchange frames to indicate support for the feature and potentially other information (e.g., type of traffic). Based on the signaled information, the access points may trigger the mechanism during the operation phase of the same. The capabilities can be announced in different ways, depending on the coordination framework being used. Some examples for the announcement or discovery of the method are through the sending or exchange of Beacons, MAPC-specific setup signaling, or ADDBA frames. For the discovery and setup of the coordinated ACK transmission method, each access point may also check whether its associated STAs support the functionality or not. The capabilities can be announced through, e.g., Beacons or Association/Reassociation frames, whereas the setup can be performed through specific signaling (e.g., MAPC-specific frames, extended ADDBA request/response frames) that includes C-ACK information such as the mode used, timeouts, etc.

For the operation phase 401B, access point AP1 may initiate the operation phase by sending in step 405A a C-ACK transmission trigger to access point AP2. In response, access point AP2 may reply in step 405B with a C-ACK transmission response. Following this, the set of apparatuses AP1, AP2, STA1, and STA2 may exchange data according to the transmission schedule of the C-ACK transmission method. Specifically, access point AP1 may transmit one or more data frames 406A, and upon sending these one or more data frames 406A, access point AP1 may receive an ACK message 406B from station STA1. If multiple data frames are transmitted under the BACK protocol, the ACK message 406B may be a BACK response. Similarly, access point AP2 may transmit one or more data frames 407A, and upon transmission, access point AP2 may receive an ACK message 407B from station STA2, which could also be a BACK response if multiple frames are transmitted within the BACK protocol. The transmission schedule may be determined by the access point AP1. The transmission schedule may indicate how the ACK frames may be deferred on the communication links L1 and L2. For that, the transmission schedule may define the data-control frame spacing 409A that indicates at which time the ACK message 406B is to be transmitted. The transmission schedule may further define the data-control frame spacing 409B that indicates at which time the ACK message 407B is to be transmitted. The data-control frame spacing 409A may, for example, enable an ACK deferral for the ACK message 406B while the data-control frame spacing 409B may, for example, enable an ACK deferral for the ACK message 407B.

Hence, once the setup phase 401A is done, right after accessing the communication channel, access point AP1 which implements the C-ACK transmission functionality (referred to as *Sharing Device*) may trigger other apparatuses (referred to as *Shared Devices*) to coordinate the transmission of their ACK/BACK frames. Other devices receiving the trigger can reply to it by indicating their willingness to coordinate the ACK/BACK transmission. From that point, the transmission of data and ACK frames are performed as agreed. The Sharing and Shared Devices may agree on the way in which ACK transmissions are to be coordinated (e.g., same shared TXOP, separate TXOPs). For that, multiple mechanisms are possible, and their specific implementation is upon the specific protocol being used. MAPC coordination frames, for instance, can be employed to first agree on the execution of the feature and then on the scheduling of the transmission of the different types of frames (e.g., Data and ACK frames). Within multi-AP TXOP sharing, such information may be carried by MU-RTS TXS and CTS frames. Alternatively, within BACK, a Block ACK Request (BAR) may be used to trigger the ACK/BACK transmissions at a desired point in time. From the point of view of the recipients of the data transmissions, they may be aware of the ACK deferral procedure. For that, they may be notified on the possibility of having to defer the transmission/reception of the ACK and on the time in which they need to send/receive ACK frames. This procedure can incur additional signaling, either in terms of new frames or new fields.

In this example, the subset of apparatuses queried during the setup phase by the first apparatus, access point AP1, for selecting the set of apparatuses includes access point AP2, but it may also encompass other access points. For example, the signalling between access points AP1 and AP2 shown in the setup phase may be performed by access point AP1 with each other access point of the subset. Furthermore, the setup phase may result in selecting the set of apparatuses which is shown to include, for simplicity, AP1, AP2, STA1 and STA2, but it may comprise further access points of the subset and associated stations. In this case, the operation schedule may indicate operations to be performed by access points AP1 and AP2 and the other access points and associated stations.

In the termination or modification phase 401C, access point AP1 may initiate this phase by sending (410A) a termination or modification indication to access point AP2. In response, access point AP2 may reply (410B) with a termination or modification response. Thereafter, access point AP2 may send (412A) a termination or modification indication to station STA2. In response, station STA2 may reply (412B) with a termination or modification response. The access point AP1 may send (411A) a termination or modification indication to station STA1. In response, stationSTA2 may reply (411B) with a termination or modification response.

Hence, the termination or modification of the operation may be performed by each involved device. For such an end, a control frame is used to indicate the finalization of the coordination, which triggers the modification/deletion of related buffers at both AP and STA sides. On receiving a termination/modification request, a device acknowledges it by sending another message. Like for the setup and operation of the C-ACK transmission method, the termination/modification of the C-ACK transmission method varies depending on the implementation. For example, MAPC signaling is used for the modification and teardown, whereas specific signaling such as DELBA frames are to be used within the BACK extension. Regarding multi-AP TXOP sharing, no termination/modification may be required, given that it is a dynamic approach in which the decisions are taken independently in each shared TXOP.

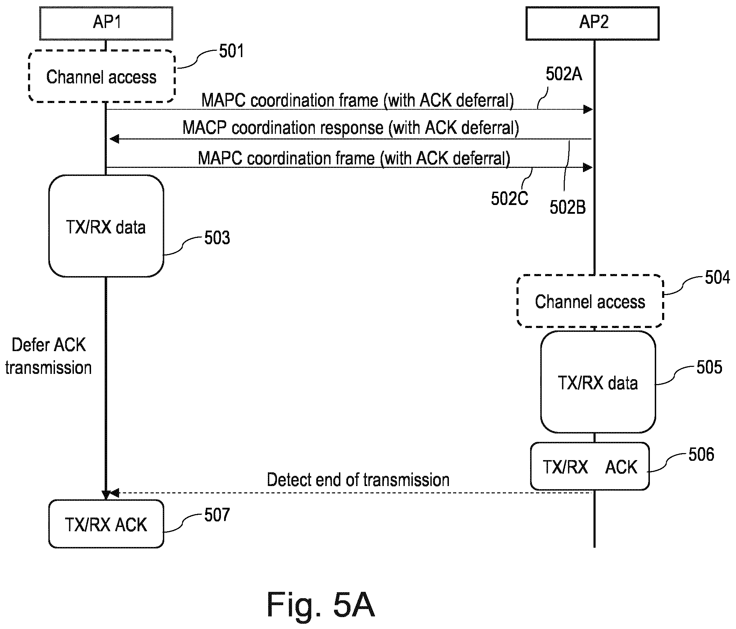

As described with reference to FIG. 4, each phase of the C-ACK transmission method may be implemented depending on the type of the coordination framework being used. **FIG. 5A** depicts a signaling diagram showing the operation phase of the C-ACK transmission method utilizing the MAPC protocol as the coordination framework according to an example of the present subject matter. For simplicity, only the signaling between access points AP1 and AP2 is depicted in the drawings.

The access point AP1 having the priority access to the communication channel according to the MAPC protocol may be referred to as *sharing device* and the other contenders such as access point AP2 may be referred to as *shared devices.* The procedure starts with the access in step 501 to the communication channel by access point AP1 which then sends in step 502A an MAPC coordination frame (e.g., supporting both TXOP sharing and coordinated ACK transmission) to potential *shared APs* such as access point AP2. The MAPC coordination frame is a message that allows probing other compatible APs (e.g., APs who are in the same MAPC group and that implement the C-ACK functionality) to perform the deferral of ACKs. On receiving a MAPC coordination frame, the access point AP2 may reply in step 502B to it by indicating its willingness to be part of the ACK deferral. At this point, low latency requirements (e.g., through indicating the buffer status and current delay metrics) may be indicated by the access point AP2 to the access point AP1. Then, based on the inputs received, the access point AP1 decides the moment at which ACKs are to be transmitted (e.g., at the end of data transmissions from the two APs) and communicates in step 502C the scheduling decision to the involved apparatuses STA1 STA2 and AP2, i.e., including the recipients of the transmissions. The scheduling decision may indicate the ACK deferral for each communication link.

Steps 503 through 507 may thus be performed based on the scheduling decision. The access point AP1 transmits a data frame in step 503 to the apparatus STA1. The ACK message by the apparatus STA1 may be deferred according to the scheduling decision so the access point AP2 may access the communication channel in step 504 to transmit a data frame in step 505 to the apparatus STA2. According to the scheduling decision, the apparatus STA2 may transmit the ACK frame in step 506 with an ACK deferral that may be equal to the gap time defined by the coordination framework to send the ACK messages. According to the scheduling decision, the apparatus STA1 may transmit the ACK frame in step 507 to the access point AP1 with an ACK deferral after the transmission instance between access point AP2 and apparatus STA2 is finished. This may be performed after detecting by the access point AP1 that the end of the transmission on the communication link L2.

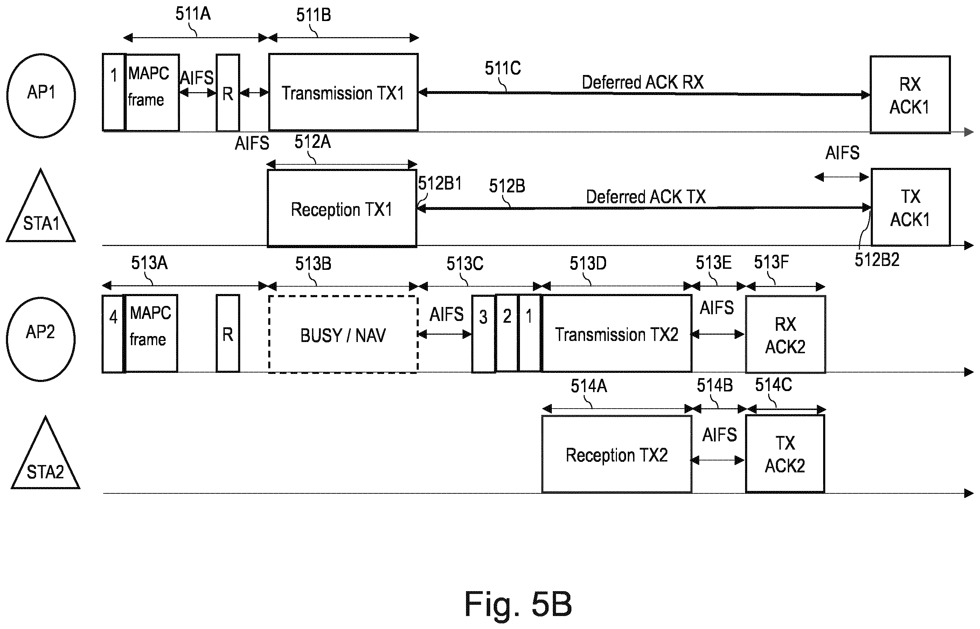

**FIG. 5B** illustrates the status of the access to the communication channel by the set of apparatuses AP1, AP2, STA1 and STA2 in accordance with the C-ACK transmission method. Each of the set of apparatuses is associated with a timeline that outlines the operations it performs according to the transmission schedule. The timeline defines specific timing intervals involved in the apparatus's transmissions. For simplicity in the drawing, the timing interval for a frame's transmission may be the same as the timing interval for its reception, where the frame may be a data frame or control frame. Additionally, the size of certain periods, such as AIFS, is depicted differently in the drawings for simplicity, even though they are the same. The labeled bars 1, 2, 3, and 4 in the drawing represent the countdown values of a backoff timer used for performing a random backoff before accessing the communication channel. The backoff timer expires when it reaches zero, for example.

After a backoff timer expires and the access point AP1 accesses the communication channel, the access point AP1 may carry out an action according to the MAPC protocol during the timing interval 511A before transmitting the data frame during the timing interval 511B to the apparatus STA1. For example, during the timing interval 511A, the access point AP1 may send a MAPC frame to the access point AP2. The apparatus STA1 may receive during the timing interval 512A the data frame. The reception of the acknowledgment of the data frame's reception by the apparatus STA1 may be delayed by timing interval 511C, which may be the period between the end 512B1 of the data frame's reception and the time 512B2 when the apparatus STA1 sends the acknowledgment. Since the timing interval for a frame's transmission may be the same as the timing interval for its reception, the timing interval 512B for deferring the transmission of the acknowledgment could be equal to timing interval 511C for deferring the reception of the acknowledgment.

For example, the access point AP2 may perform an action in accordance with the MAPC protocol during the timing interval 513A while trying to access the communication channel. This is indicated by the beginning of the timing interval 513A which represents a status of the backoff timer for accessing the communication channel. For example, during the timing interval 513A, the access point may receive a MAPC frame from access point AP1 and send a response (R). The access point AP2 may continue the gain of access to the communication channel after access point AP1 has completed transmitting its data frame, with this gain of access lasting for the timing interval 513C. To simplify the drawing, the timing interval 513B, during which the channel was busy, may correspond to the timing interval 512A required for receiving the data frame at the apparatus STA1. Following this, access point AP2 may transmit a data frame to the apparatus STA2 during the timing interval 513D. The apparatus STA2 may receive the data frame during the timing interval 514A. The acknowledgment of the data frame's reception by the apparatus STA2 may be deferred for the timing interval 514B (which may be equal to the timing interval 513E). The timing interval 514B may be equivalent to one AIFS. The access point AP2 may receive during the timing interval 513F the acknowledgment frame from the apparatus STA2.

The timing interval 512B for ACK deferral in the communication link L1 involving the access point AP1 and the station STA1 may be defined in accordance with the timing intervals involved in the transmission of the communication link L2 involving the access point AP2 and the station STA2. This is indicated in FIG. 5B, where the timing interval 512B for ACK deferral may be the sum of the timing intervals 513C, 513D, 513E, 513F and one AIFS.

The timing intervals 512B and 514B may be an example of the set of data-control control spacing defined for the communication links L1 and L2 respectively.

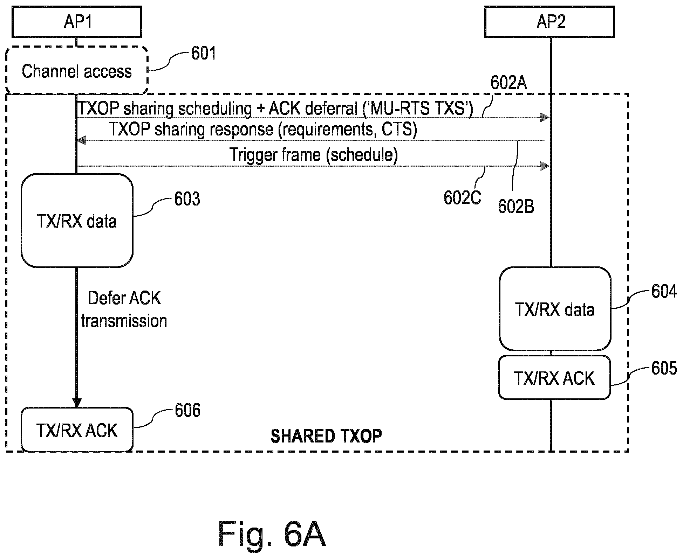

**FIG. 6A** depicts a signaling diagram showing the operation phase of the C-ACK transmission method utilizing the multi-AP TXOP sharing protocol as the coordination framework according to an example of the present subject matter. For simplicity, only the signaling between access points AP1 and AP2 is depicted in the drawings.

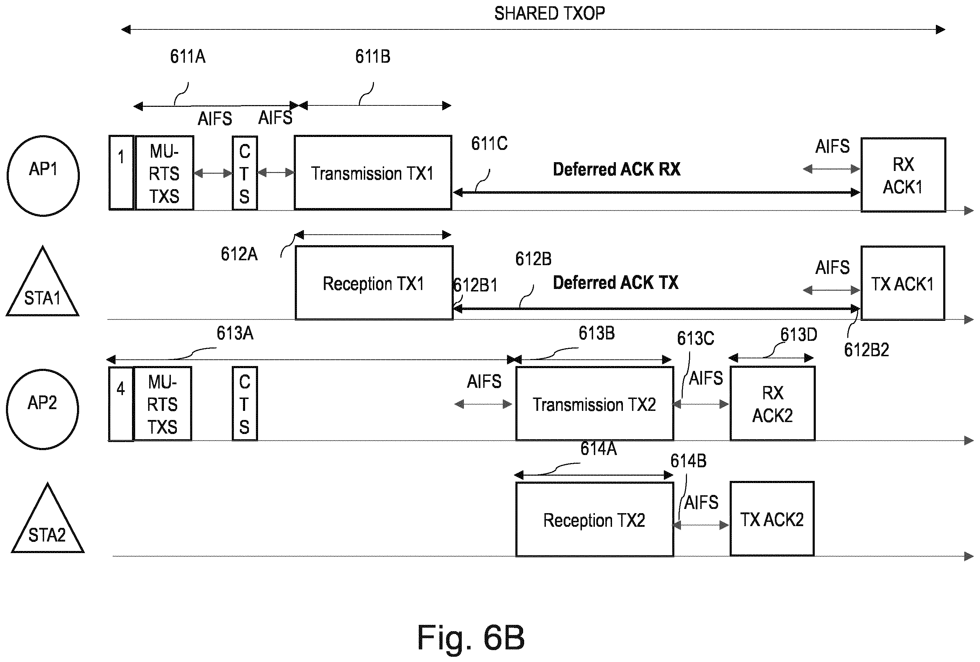

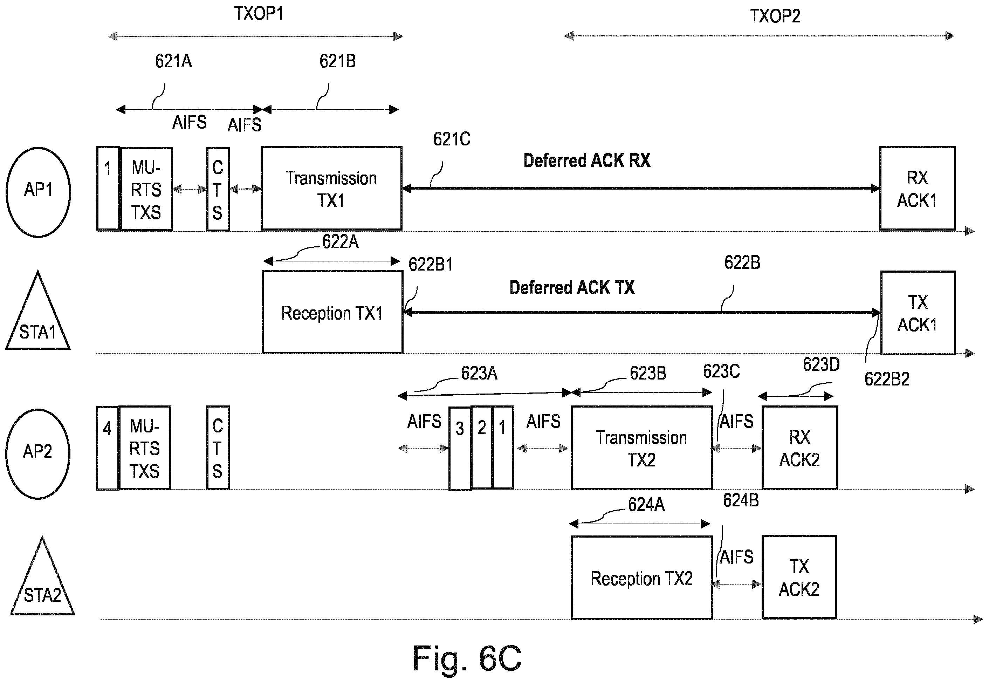

The procedure starts with the access in step 601 to the communication channel by access point AP1 which then sends in step 602A a MU-RTS TXS control frame to find candidates such as access point AP2 for the coordination. Then, other APs such as access point AP2 may reply in step 602B positively with a CTS frame, so that the deferral of ACKs is scheduled, which allows the access point AP2 to transmit low latency data before the ACK from the AP1's transmission. Then, based on the inputs received, the access point AP1 decides the moment at which ACKs are to be transmitted (e.g., at the end of data transmissions from the two APs) and communicates in step 602C the scheduling decision to the involved apparatuses STA1 STA2 and AP2, i.e., including the recipients of the transmissions. The scheduling decision may indicate the ACK deferral for each communication link. As shown in FIGs. 6B and 6C, the operation phase (and thus the transmission of deferred ACKs) may take place either within the same shared TXOP or in different shared TXOPs respectively.

Steps 603 through 606 may thus be performed based on the scheduling decision. The access point AP1 transmits a data frame in step 603 to the apparatus STA1. The ACK message by the apparatus STA1 may be deferred according to the scheduling decision, so the access point AP2 may transmit a data frame in step 604 to the apparatus STA2. According to the scheduling decision, the apparatus STA2 may transmit the ACK frame in step 605 with an ACK deferral that may be equal to the gap time defined by the coordination framework to send the ACK messages. According to the scheduling decision, the apparatus STA1 may transmit the ACK frame in step 606 to the access point AP1 with an ACK deferral after the transmission instance between access point AP2 and apparatus STA2 is finished.

**FIG. 6B** illustrates the status of the access to the communication channel by the set of apparatuses AP1, AP2, STA1 and STA2 in accordance with the C-ACK transmission method. Each of the set of apparatuses is associated with a timeline that outlines the operations it performs according to the transmission schedule. The timeline defines specific timing intervals involved in the apparatus's transmissions. For simplicity in the drawing, the timing interval for a frame's transmission may be the same as the timing interval for its reception, where the frame may be a data frame or control frame. Additionally, the size of certain periods, such as AIFS, is depicted differently in the drawings for simplicity, even though they are the same. The labeled bars 1, 2, 3, and 4 in the drawing represent the countdown values of a backoff timer used for performing a random backoff before accessing the communication channel. The backoff timer expires when it reaches zero, for example.

After a backoff timer expires and the access point AP1 accesses the communication channel, the access point AP1 may carry out an action according to the multi-AP TXOP sharing protocol during the timing interval 611A before transmitting the data frame during the timing interval 611B to the apparatus STA1. During the timing interval 611A, the access point AP1 may send a MU-RTS TXS frame to access point AP2 and receive a CTS control frame from access point AP2. The apparatus STA1 may receive during the timing interval 612A the data frame. The reception of the acknowledgment of the data frame's reception by apparatus STA1 may be delayed by timing interval 611C, which may be the period between the end 612B1 of the data frame's reception and the time 612B2 when STA1 sends the acknowledgment. Since the timing interval for a frame's transmission may be the same as the timing interval for its reception, this may mean the timing interval 612B for deferring the transmission of acknowledgment could be equal to timing interval 611C for deferring the reception of acknowledgment.

For example, the access point AP2 may perform an action in accordance with the TXOP protocol during the timing interval 613A. while trying to access the communication channel. This is indicated by the beginning of the timing interval 613A which represents a status of the backoff timer for accessing the communication channel. For example, during the timing interval 613A, the access point AP2 may receive MU-RTS TXS control frame from access point AP1 and send a CTS control frame to access point AP1. The access point AP2 may transmit a data frame to the apparatus STA2 during the timing interval 613B. The apparatus STA2 may receive the data frame during the timing interval 614A. The acknowledgment of the data frame's reception by the apparatus STA2 may be deferred for the timing interval 614B (which may be equal to the timing interval 613C). The timing interval 614B may be equivalent to one AIFS. The access point AP2 may receive during the timing interval 613D the acknowledgment frame from the apparatus STA2.

The timing interval 612B for ACK deferral in the communication link L1 involving the access point AP1 and the station STA1 may be defined in accordance with the timing intervals involved in the transmission of the communication link L2 involving the access point AP2 and the station STA2. This is indicated in FIG. 6B, where the timing interval 612B for ACK deferral may be the sum of one AIFS, and the timing intervals, 613B, 613C and 613D and one more AIFS.

The timing intervals 612B and 614B may be an example of the set of data-control control spacing defined for the communication links L1 and L2 respectively.

FIG. 6C illustrates the status of the access to the communication channel by the set of apparatuses AP1, AP2, STA1 and STA2 in accordance with the C-ACK transmission method involving different shared TXOPs. The labeled bars 1, 2, 3, and 4 in the drawing represent the countdown values of a backoff timer used for performing a random backoff before accessing the communication channel. The backoff timer expires when it reaches zero, for example.

The first shared TXOP, TXOP1, is used for transmission of a data frame on the communication link L1. After a backoff timer expires and the access point AP1 accesses the communication channel, the access point AP1 may carry out an action according to the multi-AP TXOP sharing protocol during the timing interval 621A before transmitting the data frame during the timing interval 621B to the apparatus STA1. The apparatus STA1 may receive during the timing interval 622A the data frame. The reception of the acknowledgment of the data frame's reception by apparatus STA1 may be delayed by timing interval 621C, which may be the period between the end 622B1 of the data frame's reception and the time 622B2 when STA1 sends the acknowledgment. Since the timing interval for a frame's transmission may be the same as the timing interval for its reception, the timing interval 622B for deferring the transmission of the acknowledgment could be equal to timing interval 621C.

For example, the access point AP2 may perform an action in accordance with the multi-AP TXOP sharing protocol before the timing interval 623A during which the access point AP2 may gain access to the communication channel and thus have the second TXOP, TXOP2. The access point AP2 transmits a data frame to the apparatus STA2 during the timing interval 623B. The apparatus STA2 may receive the data frame during the timing interval 624A. The acknowledgment of the data frame's reception by STA2 may be deferred for the timing interval 624B (which may be equal to the timing interval 623C). The timing interval 624B may be equivalent to one AIFS. The access point AP2 may receive during the timing interval 623D the acknowledgment frame from the apparatus STA2.

The timing interval 622B for ACK deferral in the communication link L1 involving the access point AP1 and the station STA1 may be defined in accordance with the timing intervals involved in the transmission of the communication link L2 involving the access point AP2 and the station STA2. This is indicated in FIG. 6C, where the timing interval 622B for ACK deferral may be the sum of the timing intervals, 623A, 623B, 623C and 623D and one AIFS. Thus, the timing interval 622B for deferring the transmission of the acknowledgment extends across two transmission opportunities.

In this example, of FIG. 6C, the receiver part on the communication link L2 is aware of the end of transmission on the communication link L1 (e.g., by overhearing L1's transmissions or by being triggered by the sender e.g., its own AP), so that it can transmit the ACK at the right time.

The timing intervals 622B and 624B may be an example of the set of data-control control spacing defined for the communication links L1 and L2 respectively.

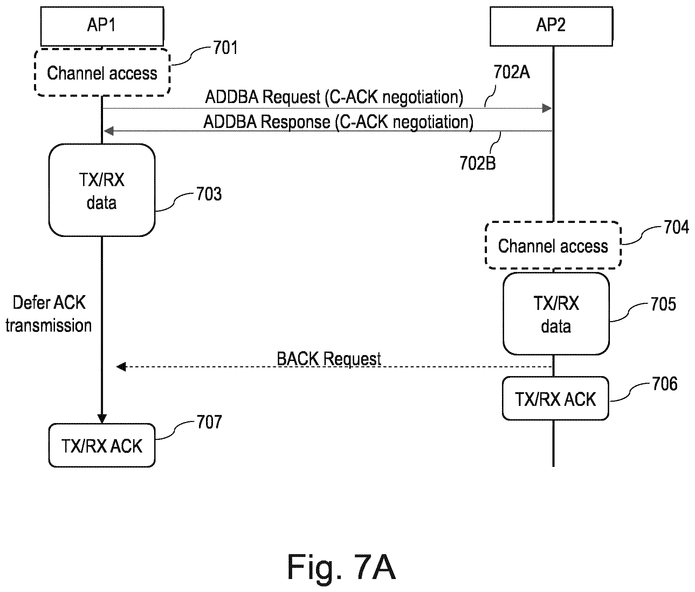

**FIG. 7A** depicts a signaling diagram showing the operation phase of the C-ACK transmission method utilizing the BACK protocol as the coordination framework, according to an example of the present subject matter. For simplicity, only the signaling between access points AP1 and AP2 is depicted in the drawings.

The procedure starts with the access in step 701 to the communication channel by access point AP1 which then sends in step 702A an ADDBA request that, besides frame-aggregation-related information, may include information for negotiating a C-ACK such as information indicating whether a delayed or immediate method may be used for ACK, a device responsible for triggering the BACK request, etc. On receiving a ADDBA request, the access point AP2 may reply in step 702B to it e.g., indicating its willingness to be part of the ACK deferral. The access point AP1 determines a scheduling decision indicating the moment at which ACKs are to be transmitted (e.g., at the end of data transmissions from the two APs) by the apparatus STA1. The scheduling decision may indicate the ACK deferral for each communication link. For example, the task of sending a BACK Request may be offloaded to access point AP2. For that, the schedule may be agreed at the beginning, where the trasnmision of the ACK to apparatus STA1 may be done once the transmission from access point AP2 is finished, which may be followed by the BACK Request. For example, the scheduling decision may be communicated to access point AP2 in step 702A and/or 702B. After transmitting or receiving data, access point AP2 may send a BACK Request that should be understood by both apparatuses STA1 and STA2 (not shown). Then, the apparatuses STA1 and STA2 should send the BACKs based on some timing criteria. The timing criteria may for example require one or more AIFSs before sending the BACKs.

Steps 703 through 707 may thus be performed based on the scheduling decision. The access point AP1 transmits a data frame in step 703 to the apparatus STA1. The ACK message by the apparatus STA1 may be deferred according to the scheduling decision, so the access point AP2 can access the communication channel in step 704 to transmit a data frame in step 705 to the apparatus STA2. According to the scheduling decision, the apparatus STA2 may transmit the ACK frame in step 706 with an ACK deferral that may be equal to the gap time defined by the coordination framework to send the ACK messages. According to the scheduling decision, the apparatus STA1 may transmit the ACK frame in step 707 to the access point AP1 with an ACK deferral after the transmission instance between access point AP2 and apparatus STA2 is finished. This may be performed after detecting that a BACK request, as illustrated with dashed line in FIG. 7A, is provided on the communication link L2.

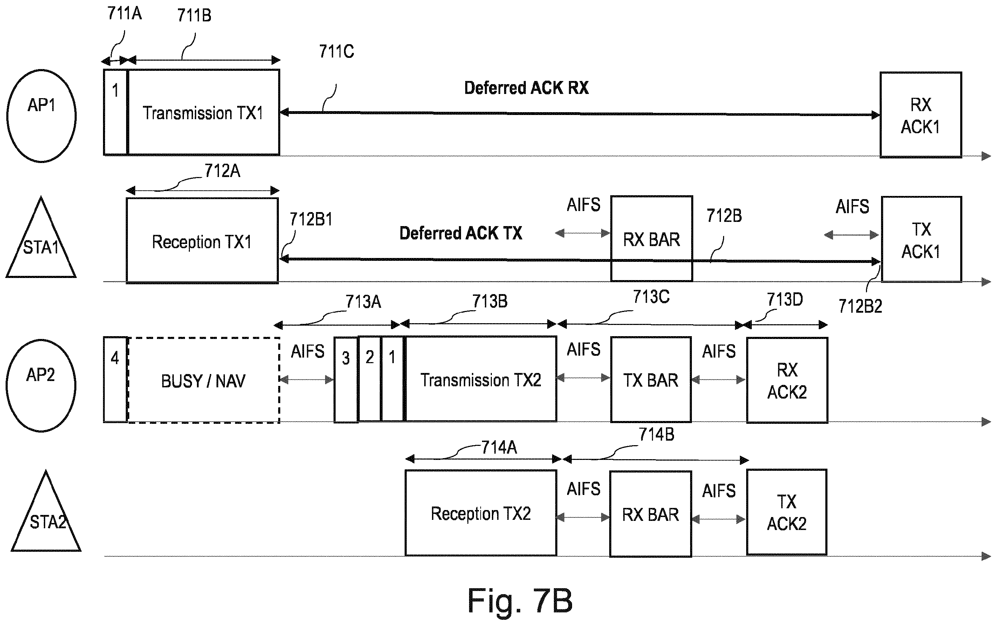

**FIG. 7B** illustrates the status of the access to the communication channel by the set of apparatuses AP1, AP2, STA1 and STA2 in accordance with the C-ACK transmission method. Each of the set of apparatuses is associated with a timeline that outlines the operations it performs according to the transmission schedule. This timeline defines specific timing intervals involved in the apparatus's transmissions. For simplicity in the drawing, the timing interval for a frame's transmission may be the same as the timing interval for its reception, where the frame may be a data frame or control frame. Additionally, the size of certain periods, such as AIFS, is depicted differently in the drawings for simplicity, even though they are the same.

Once the timing interval 711A concludes, the backoff timer expires, allowing access point AP1 to access the communication channel, and the access point AP1 may transmit at least one data frame during the timing interval 711B to the apparatus STA1. The apparatus STA1 may receive during the timing interval 712A the data frame. The reception of the acknowledgment of the data frame's reception by apparatus STA1 may be delayed by timing interval 711C, which may be the period between the end 712B1 of the data frame's reception and the time 712B2 when STA1 sends the acknowledgment. Since the timing interval for a frame's transmission may be the same as the timing interval for its reception, the timing interval 712B for deferring the transmission acknowledgment could be equal to timing interval 711C. As indicated in FIG. 7B, the timing interval 712B for deferring the transmission acknowledgment should end to the end of a predefined period after the apparatus STA1 has received a BAR request from the access point AP2, wherein the predefined period may, for example, include one AIFS, the time required for access point AP2 to transmit or receive an acknowledgment, and an additional AIFS.

For example, the access point AP2 may behave regularly and wait until transmission between access point AP1 and apparatus STA1 is finished . For example, the end of this transmission may automatically be detected (e.g., no need for signaling for the detection), and after that, during the timing interval 713A, access point AP2 may run one AIFS plus its remaining backoff. From that point, access point AP2 can transmit the data and, at some arbitrary point (can be immediate or delayed, based on BACK naming), sends the BACK Request (BAR) that in this case is meant for both STA1 and STA2. Thus, the access point AP2 may transmit at least one data frame to the apparatus STA2 during the timing interval 713B. The apparatus STA2 may receive the data frame during the timing interval 714A. The acknowledgment of the data frame's reception by the apparatus STA2 may be deferred for the timing interval 714B (which may be equal to the timing interval 713C). The timing interval 714B may be equivalent to two AIFSs and a RX BAR time. The access point AP2 may receive during the timing interval 713D the acknowledgment frame from the apparatus STA2.

The timing interval 712B for ACK deferral in the communication link L1 involving the access point AP1 and the station STA1 may be defined in accordance with the timing intervals involved in the transmission of the communication link L2 involving the access point AP2 and the station STA2. This is indicated in FIG. 7B, where the timing interval 712B for ACK deferral may be the sum of the timing intervals 713A, 713B, 713C, 713D and one AIFS.

The timing intervals 712B and 714B may be an example of the set of data-control control spacing defined for the communication links L1 and L2 respectively.

For example, with the BACK protocol, control frame transmissions may occur and, at some point, one of the transmitters send a BACK request that not only triggers the corresponding ACK/BACK transmission but also triggers the transmission of the delayed ACK/BACK from the other device participating in C-ACK transmission method. FIG. 7A describes the case in which the trigger of the ACKs is transmitted by a single device but interpreted by all the involved receivers, including inter-BSS (e.g., non-associated) devices. Nevertheless, other triggering mechanisms are possible.

Hence, with the present subject matter, the BACK feature is extended to allow the coordination of multiple devices' ACKs, not necessarily within the same BSS. Following this approach, the transmission of ACKs from multiple transmissions is coordinated through extended Block ACK Requests, which are proposed to trigger the transmission of ACKs from multiple devices at some agreed time in the future either with a default delay or a predefined extended delay. The multiplexing of the ACKs can be achieved in different ways, including a single trigger from a given device that schedules the transmission of the different ACKs by multiplexing them into specific time/frequency resources, or through the ordered transmission of individual triggers, which are transmitted by each transmission originator. The first approach may require inter-BSS communication capabilities (e.g., an AP or STA should be able to communicate with APs or STAs in other BSSs). For the second approach, only the transmitters (e.g., APs) may be required to communicate with each other, whilst receivers would be agnostic of this process (they would only expect the reception of ACK triggers from their transmitter counterparts). FIG. 7B shows the case in which a single trigger/BAR (sent by AP2) is used to initiate the transmissions of the different ACKs.

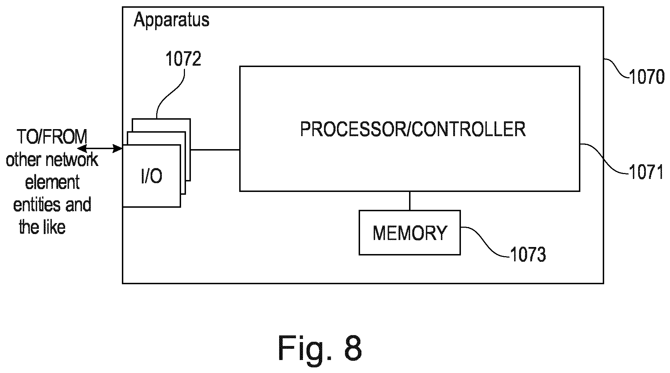

In **FIG. 8****,** a block circuit diagram illustrating a configuration of an apparatus 1070 is shown, which is configured to implement at least part of the present subject matter. The apparatus may be a user equipment or an access point for wireless communication. It is to be noted that the apparatus 1070 shown in FIG. 8 may comprise several further elements or functions besides those described herein below, which are omitted herein for the sake of simplicity as they are not essential for the understanding. Furthermore, the apparatus may be also another device having a similar function, such as a chipset, a chip, a module etc., which can also be part of an apparatus or attached as a separate element to the apparatus 1070, or the like. The apparatus 1070 may comprise a processing function or processor, or controller 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and instructions, such as programs to be executed by the processor 1071 and/or as a working storage of the processor 1071.

The processor 1071 is configured to execute processing related to the above described subject matter. In particular, the apparatus 1070 may be configured to perform the method as described in connection with FIG. 1 or 2.

For example, the processor 1071 is configured to perform: determining a set of interfering apparatuses that are configured for accessing a communication channel of a wireless communication system using communication links between the apparatuses, the set of apparatuses comprising the apparatus; determining a transmission schedule that indicates, for each communication link, a data-control frame spacing between a data frame and corresponding control frame, the data-control frame spacing enabling a reduction of a delay in transmission of data frames by the set of apparatuses; controlling the set of apparatuses to transmit data frames and control frames in the communication channel in accordance with the transmission schedule.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. An apparatus comprising at least one processor; and at least one memory storing instructions that, when executed by the at least one processor, cause the apparatus at least to perform:
determining a set of interfering apparatuses that are configured for accessing a communication channel of a wireless communication system using communication links between the set of interfering apparatuses, the set of interfering apparatuses comprising the apparatus;
determining a transmission schedule that indicates, for each communication link, a data-control frame spacing between a data frame and corresponding control frame, the data-control frame spacing enabling a reduction of a delay in transmission of data frames by the set of interfering apparatuses;
controlling the set of interfering apparatuses to transmit data frames and control frames in the communication channel in accordance with the transmission schedule.

2. The apparatus of claim 1, the control frames comprising acknowledgement frames.

3. The apparatus of claim 1 or 2, wherein the transmission of the data frame and corresponding control frame is referred to as transmission instance, wherein the duration of the transmission instance includes transmitting the data frame, transmitting the control frame, and the data-control frame spacing on the communication link, wherein the data-control frame spacing is indicative of a point of time at which to transmit the control frame after transmitting a corresponding data frame, wherein the point of time occurs before a next transmission instance on the communication link.

4. The apparatus of any of the preceding claims, wherein the transmission of the data frame and corresponding control frame is referred to as transmission instance, wherein the duration of the transmission instance includes transmitting the data frame, transmitting the control frame, and the data-control frame spacing on the communication link, wherein the data-control frame spacing lasts for at least one of the following:
the duration of one or more transmission instances on respective other communication links;
one or more default Arbitration Inter-Frame Spaces (AIFSs);
a time of transmission of a Block Acknowledgement, BACK, request; or
a time for gaining access to the communication channel.

5. The apparatus of any of the preceding claims, wherein a transmission of a data frame and corresponding control frame is referred to as transmission instance, wherein the set of interfering apparatuses are controlled to perform respective transmission instances during a shared transmission opportunity, TXOP.

6. The apparatus of any of the preceding claims, the wireless communication system being configured according with a Multi-Access Point Coordination, MAPC, protocol, wherein the set of interfering apparatuses are controlled to transmit the data frames and control frames in accordance with the transmission schedule during a MAPC session that is established between the set of interfering apparatuses.

7. The apparatus of any of the preceding claims 1 to 5, the wireless communication system being configured according with a Block Acknowledgement, BACK, protocol, wherein the set of interfering apparatuses are controlled to transmit the data frames and control frames in accordance with the transmission schedule during a BACK session that is established between the set of interfering apparatuses.

8. The apparatus of any of the preceding claims, the wireless communication system comprising neighbouring wireless networks comprising a group of apparatuses including the set of interfering apparatuses, wherein the instructions, when executed by the at least one processor, further cause the apparatus to perform the determining of the set of interfering apparatuses by at least:
collecting information indicating capabilities of the entire or subgroup of the group of apparatuses of the wireless networks;
using the collected information for selecting the set of interfering apparatuses.

9. The apparatus of claim 8, wherein the instructions, when executed by the at least one processor, further cause the apparatus to perform the selecting of the set of interfering apparatuses from a candidate set based on the capabilities by at least:
gaining access to the communication channel;
performing a selection operation comprising:
sending a trigger message to a subset of the candidate set of apparatuses for triggering a transmission in accordance with the determined transmission schedule;
in response to the sending of the trigger message, receiving a confirmation message from at least some of the apparatuses; and selecting, using the apparatuses that provided the confirmation messages, the set of interfering apparatuses based on the confirmation messages.

10. The apparatus of any of the preceding claims, wherein the instructions, when executed by the at least one processor, further cause the apparatus to control the set of interfering apparatuses to terminate a transmission in accordance with the transmission schedule.

11. The apparatus of any of the preceding claims, wherein the instructions, when executed by the at least one processor, further cause the apparatus to modify the transmission schedule and control the set of interfering apparatuses to transmit data frames and control frames in accordance with the modified transmission schedule.

12. The apparatus of any of the preceding claims, the set of interfering apparatuses comprising access points and wireless devices of neighbouring wireless networks of the wireless communication system.

13. The apparatus of any of the preceding claims, the wireless communication system comprising basic service sets (BSSs), wherein the set of interfering apparatuses comprises access points and stations of interfering BSSs.

14. A method comprising:
determining a set of interfering apparatuses that are configured for accessing a communication channel of a wireless communication system using communication links between the set of interfering apparatuses; determining a transmission schedule that indicates, for each communication link, a data-control frame spacing between a data frame and corresponding control frame, the data-control frame spacing enabling a reduction of a delay in transmission of data frames by the set of interfering apparatuses; controlling the set of interfering apparatuses to transmit data frames and control frames in the communication channel in accordance with the transmission schedule.

15. A computer program comprising instructions for causing an apparatus for performing at least the following:
determining a set of interfering apparatuses that are configured for accessing a communication channel of a wireless communication system using communication links between the set of interfering apparatuses, the set of interfering apparatuses comprising the apparatus; determining a transmission schedule that indicates, for each communication link, a data-control frame spacing between a data frame and corresponding control frame, the data-control frame spacing enabling a reduction of a delay in transmission of data frames by the set of interfering apparatuses; controlling the set of interfering apparatuses to transmit data frames and control frames in the communication channel in accordance with the transmission schedule.
